# EUROPEAN PATENT APPLICATION

(11) **EP 3 211 867 A1**
(43) Date of publication of application: **30.08.2017**
(21) Application number: 16156900.9
(22) Date of filing: 23.02.2016
(51) Int. Cl.: H04M 1/725, G06F 3/0354, G06F 1/16

(54) **CONTROL ELEMENT FOR CONTROLLING AN ELECTRONIC DEVICE**

(71) Applicant: Deutsche Telekom AG, 53113 Bonn (DE)
(72) Inventor: Chari, Mohammed, 53225 Bonn (DE); van den Berge, Fridtjof, 53227 Bonn-Oberkassel (DE)
(74) Representative: Patentship Patentanwaltsgesellschaft mbH

(57) **Abstract**

A control element (100) for controlling an electronic device (101), wherein the electronic device (101) has a signaling interface (103), the control element comprising (100): a user interface (105), for user interaction; a sensor element (107) coupled to the user interface (105), the sensor element (107) being configured to register the user interaction with the user interface (105); a communication interface (109) coupled to the sensor element (107), the communication interface (109) being configured to signal the user interaction towards the signaling interface (103) of the electronic device (101) to control the electronic device (101); and a carrier (111, 303) carrying the user interface (105), the sensor element (107) and the communication interface (109), wherein the carrier (111, 303) is mountable to a housing of the electronic device (101).

## Description

### TECHNICAL FIELD

The present disclosure relates to a control element for controlling an electronic device, in particular a handheld device such as a smartphone.

### BACKGROUND

Controlling and navigating software on electronic devices such as smartphones or laptops can be done in various different ways with both hard- and software solutions, depending on the device and the installed operation system (OS).

A user can change the view on a display of the device, or execute software via a user interface on the device. Thereby, the user can, for instance, use finger- and/or hand-movements on a touch-sensitive pad, tap or clicking on an external peripheral such as a computer mouse, or tap on a touch-screen display. Most mouse-peripherals have similar functionalities on modern OS. A click or a double click on a mouse button, for instance, generally activates software or opens a folder in a file explorer.

However, hardware solutions can be damaged and, as a result, lose their functionality. In case of such damage, a change of the hardware, for instance the keyboard of a notebook, could exceed the costs of buying a new device. Software solutions on mobile devices often make use of user interfaces such like touch-screens, to achieve controlling and navigation over a virtual screen-display. Therefore, they also rely on hardware components of the devices.

A further issue of modern electronic devices is the thin, smooth and often high-gloss design of their housing which reduces a user's grip on the device. As a result, devices such as smart phones often slip from the hands of their users, in particular when only one hand is used to hold and control the device. The housing of mobile electronic devices often lacks a profiled design which could provide a grip on the device.

### SUMMARY

It is the object of the invention to facilitate the use of an electronic device, in particular a communication device.

This object is achieved by the features of the independent claims. Further implementation forms are apparent from the dependent claims, the description and the figures.

According to a first aspect, the invention relates to a control element for controlling an electronic device, wherein the electronic device has a signaling interface, the control element comprising: a user interface, for user interaction, a sensor element coupled to the user interface, the sensor element being configured to register the user interaction with the user interface, a communication interface coupled to the sensor element, the communication interface being configured to signal the user interaction towards the signaling interface of the electronic device to control the electronic device, and a carrier carrying the user interface, the sensor element and the communication interface, wherein the carrier is mountable to a housing of the electronic device.

This provides the advantage that electronic devices of different kinds can be provided with the control element in order to facilitate their operation and/or handling. The control element can function as an external peripheral for controlling the electronic device. Thereby, the control element can be of much smaller size than common external peripherals for controlling electronic devices, for instance a physical mouse.

The electronic device can be a communication device such as a smartphone, a laptop, a computer, a server, a tablet-PC, a cellphone, or a wearable electronic device such as a smartwatch. The control element can be used to control an operating system of the communication device or executable software running on the communication device. The control element can further be used as a replacement control element used to control and/or to give an input to the communication device in case a primary control element of the communication device, for instance a touchpad of a laptop or a touchscreen of a smartphone, is damaged or malfunctioning.

The electronic device can further be part of a vehicle, for instance a car, a train, a vessel, or a plane, and can be configured to receive or forward control commands or communication data. When mounted to such an electronic device in a vehicle the control element can be used to enter such control commands and/or communication data in the electronic device.

The user interface can comprise a button element which is controllable by a finger of the user. The user can interact with the button element, for instance by pushing on the button element or by laterally displacing the button element.

The sensor element can detect the movement of the button element and/or of the finger on top of the user interface and generate an electrical signal on the basis of the detected movement. The sensor element, for instance, comprises a piezoelectric element or a piezoelectric sensor that converts an applied pressure of the user on the user interface into an electrical signal. The sensor element can further comprise an optical sensor that senses a movement of the button element. The user interface and the sensor element can be a common component of the control element.

The electrical signal or inductive pulse can represent the user interaction. The sensor element can send the electrical signal to the communication interface which can forward the signal to the electrical device. Furthermore, the sensor element can convert the electrical signal into a control command before forwarded it to the communication interface.

In an implementation form of the control element, the carrier is removable respectively mountable from respectively to the housing of the electronic device by using a double-sided tape, a suction cup or a glue.

This provides the advantage that the control element can be efficiently and easily mounted onto any kind of electronic device. The housing can have a smooth surface region to which the carrier can be glued, taped, or fixated via the suction cup.

In an implementation form of the control element, the carrier is removable respectively mountable from respectively to the housing of the electronic device.

This provides the advantage that the control element can be mounted on the electronic device only when needed and removed from the electronic device after usage. Hence, the control element can be used temporarily, for example while carrying out repairs on the electronic device. After usage the control element can be removed from the electronic device without leaving traces on the electronic device.

In an implementation form of the control element, the sensor element comprises a pressure pad which is configured to register the user interaction.

This provides the advantage that the sensor element can effectively register the user interaction on the user interface. The sensor element and the user interface can be identical and/or can form a common component of the control element. The pressure pad can comprise a piezoelectric element configured to generate an electrical signal when mechanical pressure is applied. The electrical signal can be converted into a control command and/or forwarded to the communication interface.

In an implementation form of the control element, the sensor element comprises a power provision, in particular a wireless power supply interface, configured to supply the communication interface and/or the sensor element with electrical energy.

This provides the advantage that the elements of the control element can efficiently be supplied with electric energy. The wireless power supply interface can be configured to inductively receive electrical energy, for instance via a wireless power supply interface of the electronic device. Furthermore, the power provision can comprise an accumulator and/or a battery in the control element, a direct-interface connection to the electronic device, an auxiliary connection, or an external power-supply, e.g. batteries or a physical interface such as a USB interface.

In an implementation form of the control element, the user interface, the sensor element and the communication interface form a computer mouse which is mountable by the carrier to the housing of the electronic device.

This provides the advantage that operating systems and/or executable software on the electronic device can efficiently be controlled via the control element. The control element can be used to click on windows of the operating system in order to start programs, and/or to enter control commands.

In an implementation form of the control element, the electronic device is a portable communication device, wherein the control element is mountable to a housing of the communication device facilitating a user to hold and control the communication device by using a single hand.

This provides the advantage that an effective and convenient use of the control element on the communication device is facilitated. The portable communication device can be a smartphone, a tablet-PC, a laptop, or a wearable device. The control element can be mounted on the communication device in such a way that the user can operate the control element with one finger of the hand that holds the portable communication device. Due to being mounted on the housing of the communication device, the control element can form a gripping-point for a finger or a hand of the user. The control element can also be covered by a hatch or a slide-cover of the communication device.

In an implementation form of the control element, the user interface comprises a button switch, wherein the carrier at least partially encloses the button switch, wherein the button switch is movably arranged in the carrier.

This provides the advantage that the user can efficiently interact with the user interface by moving the button switch in the carrier and receive a physical response. The carrier can comprise or form a socket which at least partially surrounds the button switch.

In an implementation form of the control element, the button switch is arranged horizontally and/or vertically movable in the carrier, wherein the sensor element is configured to detect the user interaction based on the movement of the button switch.

This provides the advantage that the user can efficiently interact with the user interface by horizontally and/or vertically moving the button switch in the carrier. By moving the button switch in different directions the user can enter different control commands, for instance "up", "down", "left", "right" or "enter", which are registered by the sensor element and signaled to the electronic device via the communication interface.

In an implementation form of the control element, the control element comprises a mechanically flexible substrate, wherein the button switch rests on top of the mechanically flexible substrate in an equilibrium position, and wherein the mechanically flexible substrate is configured to cause a restoring force to the button switch to retract the button switch in its equilibrium position after deflection.

This provides the advantage that the user can efficiently interact with the user interface which returns to its initial position after interaction. Due to the restoring force the button switch further provides a haptic feedback to the user. The restoring force indicates a degree of the deflection of the button switch to the user.

In an implementation form of the control element, the button switch comprises a base segment, wherein the base segment is at least partially surrounded by the carrier, and wherein the base segment has a spherical, ellipsoidal, conical, half-ball, coin-formed, dome-formed or a cylindrical shape. The height of the base segment and/or the button switch and/or the carrier can be smaller than its radius.

This provides the advantage that the button switch can efficiently move in the carrier. The shape of the base segment can facilitate the movement of the button switch back to its equilibrium position after deflection.

In an implementation form of the control element, the button switch has a top segment, wherein the surface of the top segment forms a dome, a spherical sector or a bulge.

This provides the advantage that the user can efficiently interact with the button switch. The top segment can form a grippy surface for a finger of the user.

In an implementation form of the control element, the communication interface is a wireless communication interface, in particular a Bluetooth-interface, a NFC-interface, or a Wifi-interface, for wireless transmission preferable over a short-distance of the user input to the signaling interface.

This provides the advantage that the communication interface can efficiently signal the user interaction to the electronic device. The signaling interface can be a communication interface, for instance a Bluetooth-interface, a NFC-interface, or a Wifi-interface, of the electronic device.

In an implementation form of the control element, the carrier is mountable into a receptacle of the electronic device.

This provides the advantage that the control element can be firmly mounted on the electronic device. The receptacle can be formed by the housing of the electronic device and can partially enclose the inserted carrier. The control element can comprise a number of sealing rings, in particular O-rings, for sealing off the receptacle against water or dirt after mounting the control element in the receptacle.

In an implementation form of the control element, the control element comprises a controller configured to convert the user interaction registered by the sensor element into a command, wherein the communication interface is configured to signal the command to the electronic device.

This provides the advantage that the control element can be used efficiently to signal control commands to the electronic device.

### BRIEF DESCRIPTION OF THE DRAWINGS

Further embodiments of the invention will be described with respect to the following figures, in which:
- Fig. 1a: shows a schematic diagram of a control element according to an embodiment;
- Fig. 1b: shows a schematic diagram of a control element according to an embodiment;
- Fig. 2a: shows an exploded-view drawing of a control element with a button switch according to an embodiment;
- Fig 2b: shows a side view of the control element depicted in Fig. 2a with a button switch which is mounted into a receptacle of an electronic device according to an embodiment;
- Fig. 3a-c: show perspective drawings of button switches and carriers according to an embodiment;
- Fig. 4: shows a control element with a fairly flat coin-design according to an embodiment; and
- Fig 5: shows a control element mounted on an electronic device according to an embodiment.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims. There is no reference to any sizes, as different aspects and requirements may lead to changes in this regard.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

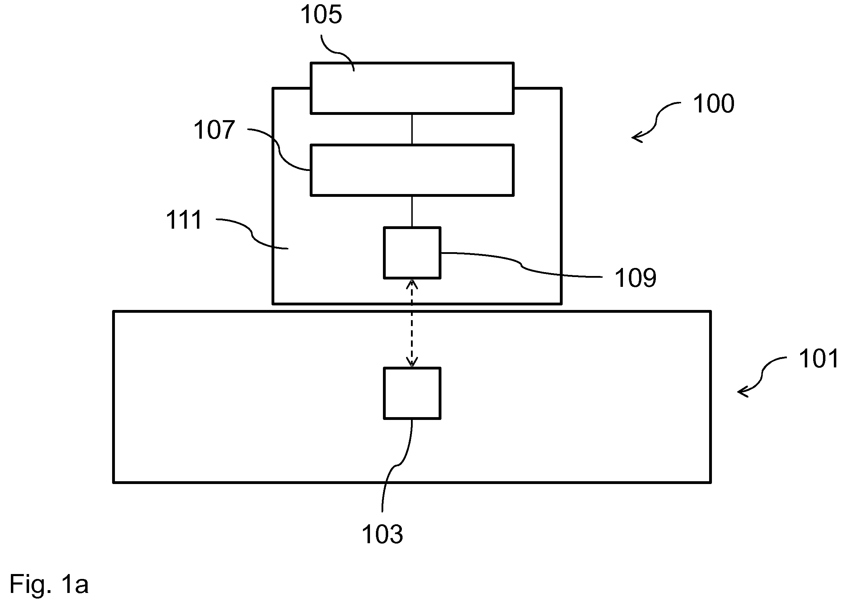

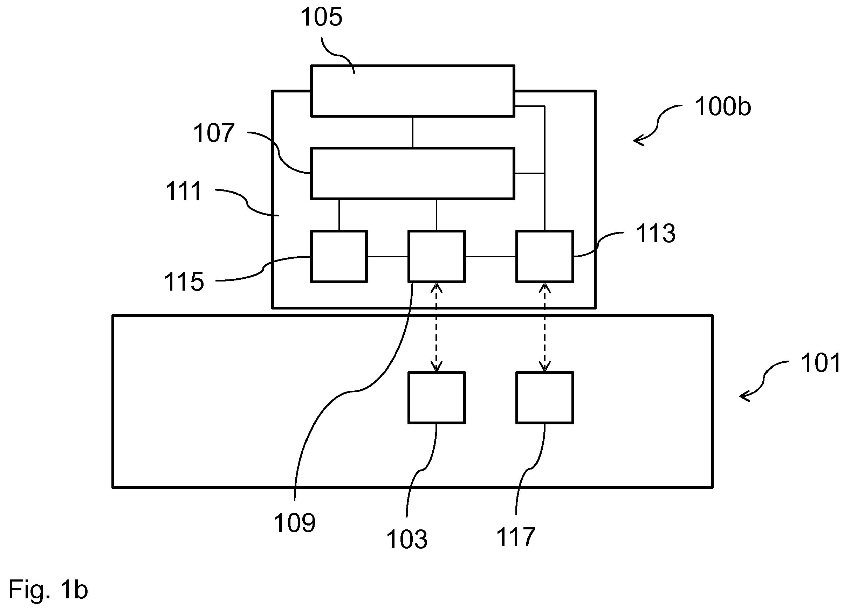

Fig. 1 a shows a schematic diagram of a control element 100 for controlling an electronic device 101 according to an embodiment. The electronic device 101 has a signaling interface 103.

The control element 100 comprises a user interface 105, for user interaction, a sensor element 107 coupled to the user interface 105, the sensor element 107 being configured to register the user interaction with the user interface 105, a communication interface 109 coupled to the sensor element 107, the communication interface 109 being configured to signal the user interaction towards the signaling interface 103 of the electronic device 101 to control the electronic device 101, and a carrier 111 carrying the user interface 105, the sensor element 107 and the communication interface 109, wherein the carrier 111 is mountable to a housing of the electronic device 101.

The electronic device 101 can be a communication device such as a smartphone, a laptop, a computer, a server, a tablet-PC, a cellphone, or a wearable electronic device such as a smartwatch. The control element 100 can be used to control an operating system of the communication device or executable software running on the communication device. The control element 100 can further be used as a replacement control element used to control the communication device in case a primary control element of the communication device, for instance a touchpad of a laptop or a touchscreen of a smartphone, is damaged or malfunctioning.

The electronic device 101 can further be part of a vehicle, for instance a car, a train, a vessel, or a plane, and can be configured to receive or forward control commands or communication data. When mounted to such an electronic device 101 in a vehicle the control element 100 can be used to enter such control commands and/or communication data in the electronic device 101.

The user interface 105 can comprise a button element which is controllable by a finger of the user. The user can interact with the user interface 105, for instance by pushing on the button element or laterally displacing the button element.

The sensor element 107 can detect the movement of the button element and/or of the finger on top of the user interface 105 and generate an electrical signal on the basis of the detected movement. The sensor element 107, for instance, comprises a piezoelectric element or a piezoelectric sensor that converts an applied pressure of the user on the button element into an electrical signal. The sensor element can further comprise an optical sensor that senses a movement of the button element. The user interface 105 and the sensor element 107 can be a common component of the control element 100.

The electrical signal can represent the user interaction. The sensor element 107 can send the electrical signal to the communication interface 109 which can forward the signal to the electrical device 101. Furthermore, the sensor element 107 can convert the electrical signal into a control command before forwarded it to the communication interface 109.

The carrier 111 can be mountable to the housing of the electronic device 101 by using, for instance, a double-sided tape, a suction cup or a glue. The housing can have a smooth surface region to which the carrier 111 can be glued, taped, or fixated via the suction cup, or by any other feasible method.

The carrier 111 can be removable mountable to the housing of the electronic device. The control element 100 can be mounted temporarily on the electronic device 101, for example while carrying out repairs on the electronic device 101. After usage the control element 100 can be removed from the electronic device 101 without leaving traces on the electronic device 101.

The sensor element 107 can comprise a pressure pad which is configured to register the user interaction. The sensor element 107 and the user interface 105 can be identical and/or can form a common component of the control element 100. The pressure pad can comprise a piezoelectric element configured to generate an electrical signal when mechanical pressure is applied. The electrical signal can be converted into a control command and/or forwarded to the communication interface 109.

The communication interface 109 can be a wireless communication interface, in particular a Bluetooth-interface, a NFC-interface, or a Wifi-interface, for wireless transmission of the user input to the signaling interface 103. Likewise, the signaling interface 103 can be a communication interface, for instance a Bluetooth-interface, a NFC-interface, or a Wifi-interface, of the electronic device 101 configured to receive the user input from the communication interface 109.

The user interface 105, the sensor element 107 and the communication interface 109 can form a computer mouse which is mountable by the carrier 111 to the housing of the electronic device 101. Such a computer mouse can be used to control an operating system and/or executable software on the electronic device 101.

The electronic device 101 can be a portable communication device, wherein the control element 100 is mountable to a housing of the communication device facilitating a user to hold and control the communication device by using a single hand. The portable communication device can be a smartphone, a tablet-PC, a laptop, or a wearable device. The control element 100 can be mounted on the communication device in such a way that the user can operate the control element 100 with one finger of the hand that holds the portable communication device 101. Due to being mounted on the housing of the communication device, the control element 100 can form a gripping-point for a finger or a hand of the user. The control element 100 can also be covered by a hatch or a slide-cover of the communication device.

Depending on its placement on the electronic device 101, advantages may be gained by being able to position the control element 100 at different positions on the housing of the electronic device 101, in being able to use a thumb to gain a good grip on the electronic device 101 via the body of the control element 100, and to use, for instance, an index-finger to initiate actions and/or input commands in the control element 100.

Fig. 1b shows a schematic diagram of a control element 100b according to an embodiment, wherein the control element 100b my comprise the components of the control element 100 as described above with respect to Fig. 1 a and may further comprise a wireless power supply interface 113, and a controller 115.

The wireless power supply interface 113 can be a part of a power provision of the control element 100. The power provision can be configured to supply the communication interface 109 and/or the sensor element 107 and or the user interface 105 with electrical energy. The wireless power supply interface 113 can be configured to inductively receive electrical energy, for instance via a wireless power supply interface 117 of the electronic device 101. Furthermore, the power provision can comprise an accumulator and/or a battery for storing electric energy, a direct-interface connection to the electronic device 101, an auxiliary connection, or an external power-supply.

The controller 115 can be configured to convert the user interaction registered by the sensor element 107 into a command. The controller 115 can further be configured to forward the command to the communication interface 109 which is configured to signal the command to the electronic device 101.

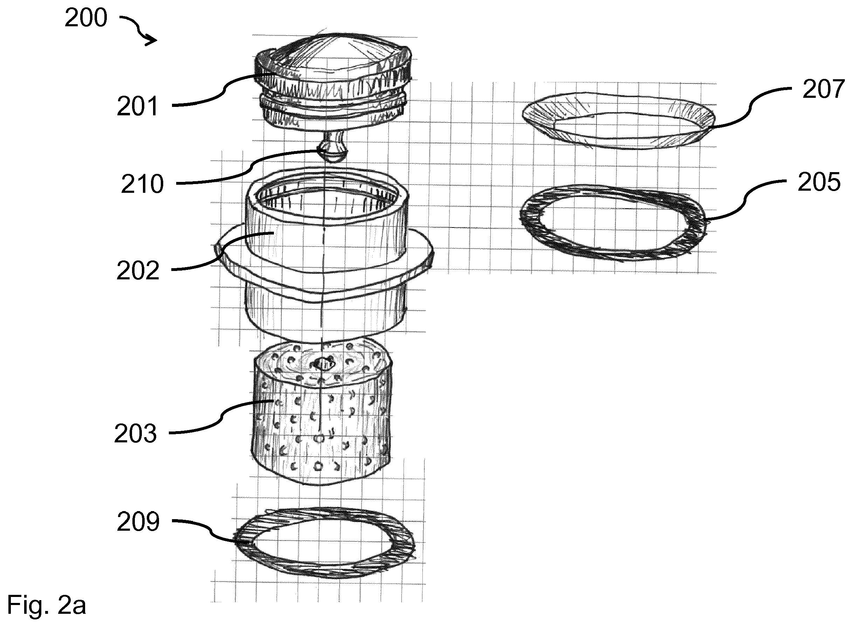

Fig. 2a shows an exploded-view drawing of a possible build-up of the control element 200 according to an embodiment. The control element 200 is an implementation of the control element 100 or the control element 100b described above with respect to Figs. 1a-b.

The control element 200 comprises a button switch 201 and a carrier 202. The carrier 202 at least partially encloses the button switch 201, which is movably arranged in the carrier 202. The carrier 202 in Fig. 2a forms a socket which surrounds the button switch 201.

The button switch 201 can be arranged horizontally and/or vertically movable in the carrier 202 respectively socket. The sensor element 107 can be configured to detect the user interaction based on the movement of the button switch 201.

By horizontally and/or vertically moving the button switch 201 the user can enter different control commands, for instance "up", "down", "left" , "right" or "execute", which are registered by the sensor element 107 and signaled to the electronic device 101 via the communication interface 109.

The control element 200 can further comprise a mechanically flexible substrate 203. The button switch 201 can rest on top of the mechanically flexible substrate 203 in an equilibrium position. The mechanically flexible substrate 203 can be configured to cause a restoring force to the button switch 201 to retract the button switch 201 in its equilibrium position after deflection.

The button switch 201 can further comprise a bulge 210 that protrudes into the flexible substrate 203. The bulge 210 can stabilized the button switch 201 and anchor the button switch 201 in the flexible substrate 203.

The flexible substrate 203 can comprise a synthetic flexible material, with a certain rigidity and/or hardness, for instance a rubber- or a polymer-material. The flexible substrate can have a short tube profile and can give pressure changes to the sensor element 107 which can be arranged under the flexible substrate. The sensor element 107 can comprise a pressure pad which registers the movements and/or pressure changes.

The pressure pad can be connected to the communication interface 109 to signal the recorded movements to the electronic device 101. A registered lateral movement on the pressure pad can, for instance, cause a movement of a cursor over the icons on a display of the electronic device 101. Likewise, a registered longitudinal pressure on the pressure pad can cause a click on an icon and activate software symbolized by the icon on the display of the electronic device.

Fig. 2a further shows a plurality of O-rings 205 and 209, with a fixation-ring 207 for stabilizing the carrier 202 when mounted on the electronic device 101 and/or for sealing off the control element 200 when mounted into a receptacle of the electronic device 101. The O-rings 205, 209 can be flexible rings and/or sealing rings. The fixation-ring 207 could be made of a preformed spring-metal ring, which can be clipped-over when installed.

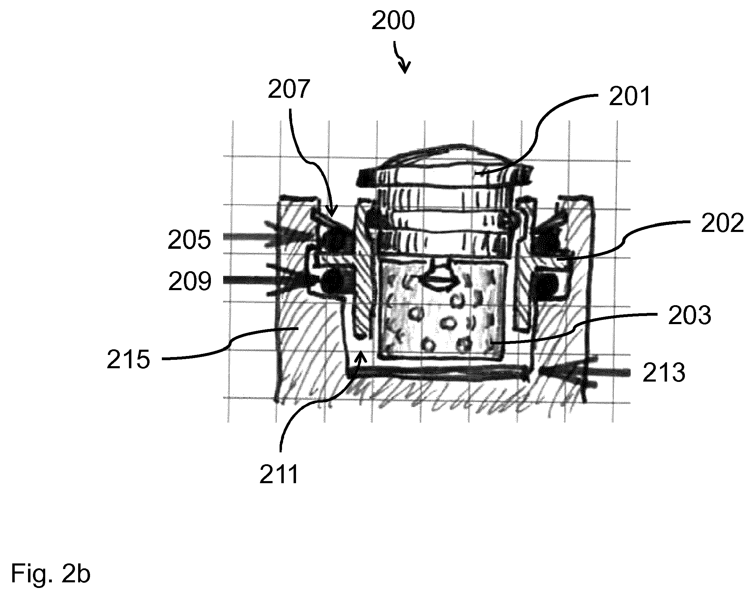

Fig. 2b shows a side view of the control element 200 with the button switch 201 that is mounted into a receptacle 211 of an electronic device 215 according to an embodiment.

The receptacle 211 can be formed by the housing of the electronic device 215 and can partially enclose the carrier 202 of the control element 200.

A number of O-rings 209, 205 can be used to seal off the receptacle 211 against water or dirt after mounting the control element 200 into the receptacle 211.

In an embodiment, the sensor element 213 forms a pressure pad under the flexible substrate 203. The pressure pad can register a movement of the flexible substrate 203.

The control element 200 can be permanently mounted in the receptacle 211 of the electronic device 215, providing an embodiment of an electronic device 215 with an integrated control element 200.

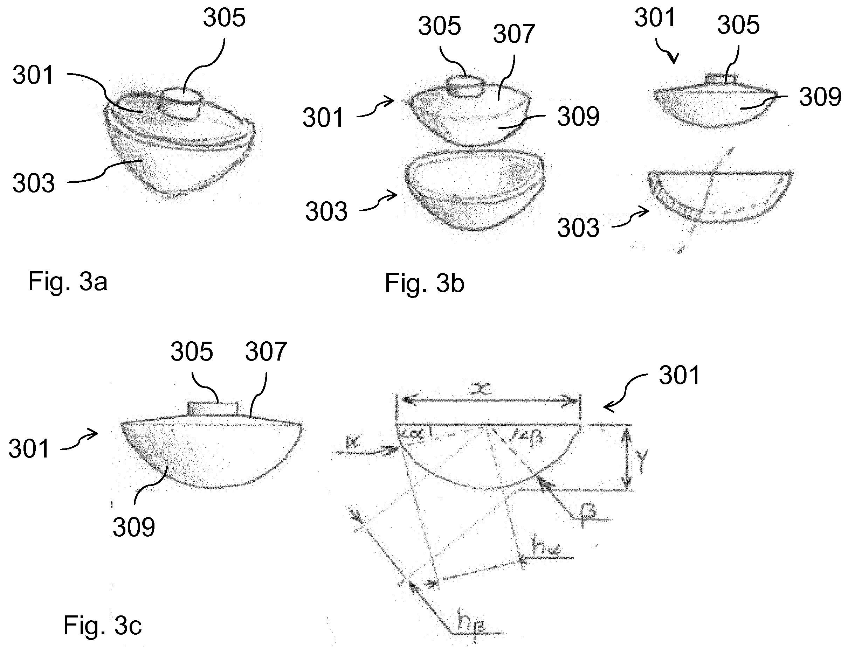

Figs. 3a-c show schematic drawings of a button switch 301 and a carrier 303 according to an embodiment, wherein. The button switches 301 and carriers 303 in Figs. 3a-c have a "pin and bowl" design.

Fig. 3a shows the button switch 301 inserted into the carrier 303 according to an embodiment. The button switch 301 in the carrier 303 can be tilted and/or pressed by the user.

The carrier 303 can be bowl shaped and can form a socket or a bearing that partially surrounds the button switch 301. The sensor element 107 can be arranged under the bowl shaped carrier, to register pressure-changes and/or movements, in particular tilting, of the button switch 301 in the carrier 303.

Fig. 3b shows perspective drawings and cross sectional views of the button switch 301 and the carrier 303 according to an embodiment.

The button switch 301 can have a top segment 307 which can have a pin or a bulge 305. The bulge 305 can facilitate the movement of the button switch 301 by a finger. The top segment 307 can further form a grippy surface onto which a finger or a hand can be put, to move the button switch 301.

In an embodiment, the top segment 307 has a declining shape which prevents rising of the structure's surface as the button switch 301 is tilted in the bearing 303. If the button switch 301 is maximally tilted, the declining top segment 307 comes level with the upper-side of the bearing 303. This allows for a control element design with a potential minimal size, in particular height, and only one moving part.

Furthermore, the button switch 301 can comprise a base segment 309. The base segment 309 can have a spherical, an ellipsoidal, a half-ellipsoidal, a conical, or a half-ball shape.

In an embodiment, the carrier 303 respectively socket is shaped to accommodate the button switch 301 and allow tilting of the button switch 301 when inserted into the carrier 303.

Fig. 3c shows a side view of the button switch 301 and its base segment 309 according to an embodiment.

The base segment 309 of the button switch 301 in Fig. 3c does not have a fully round shape. The horizontal diameter x and the vertical diameter y of the base segment 309 are not equal. The horizontal diameter x and the vertical diameter y can be related as follows: x > 2 * y. For two angles α and b, with α < β, the radius length h_{α} at the angle α can be bigger than the radius length h_{β} at the angle β: h_{α} > h_{β}, for α < β. This shape can facilitate the movement of the button switch 301 back to its equilibrium position after deflection and/or tilting.

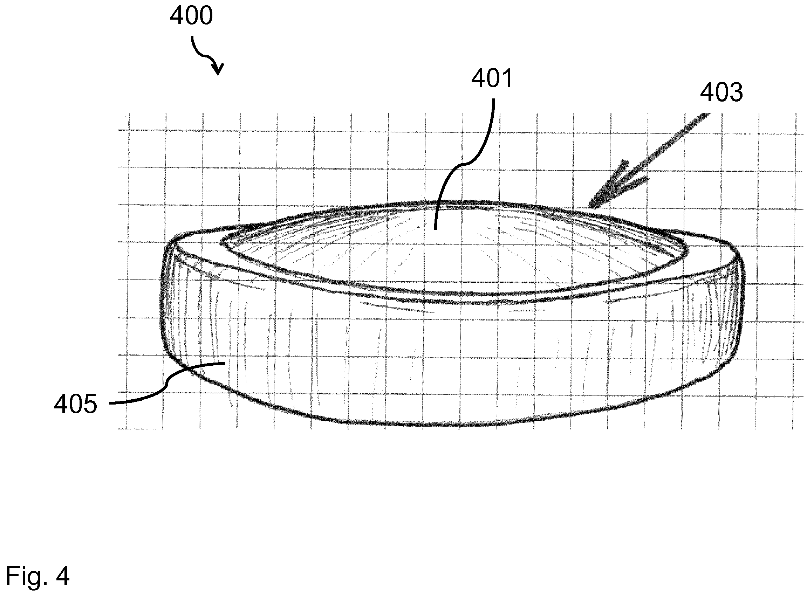

Fig. 4 shows a control element 400, in particular a receptor control element 400, with a flat coin-design according to an embodiment. The control element 400 is an implementation of the control elements 100, 100b, described above in the Figs. 1a-b, which may be covered by, for instance, a button.

The control element 400 comprises a user interface 403 which is surrounded by a carrier 405. The user interface 403 can be a digital user interface that registers pressure changes or swiping movements of a finger on its surface 401.

The user interface 403 can be a pressure sensitive cell that senses pressure inputs at different positions of its surface 401, as well as differences in applied pressures. Such a design could be very robust and resistant against many external influences, such as dirt, dust, and fluids.

The control element 400 can function as a computer mouse which is mountable by the carrier 405 to the housing of the electronic device 101. Through a certain set of movements and/or clicks by, for instance, a finger or button embodiment on the surface 401 of the user interface 403 a set of commands can be generated. The commands can control a cursor of software or an operating system. This can achieve an enhanced usability of the described control element in comparison to most external computer mouse devices.

By movements of the finger on the user interface 403, an user can generate different inputs which can be interpreted as different commands, in particular cursor movements, by the electronic device 101. The following table provides several examples of commands that can be input via the user interface 105:

| Input (movement and/or pressure) | Command |
|---|---|
| upwards (only movement) | The cursor moves upwards on the screen, can switch over to a screen in a backward fashion or upwards through listings. Also the enlargement of a displayed section on a display-screen can be achieved, when the cursor is in a marked part of the screen. |
| downwards (only movement) | The cursor moves downwards on the screen, can switch over to another screen in a forward fashion, or move down through listings. Also the downsizing of a displayed section on a display-screen can be achieved, when the cursor is in a marked part of the screen. |
| leftwards (only movement) | The cursor moves to the left of the screen and can switch the screen in a backward fashion or to a previous screen. |
| rightwards (only movement) | The cursor moves to the right of the screen and can switch over to another screen in a forward fashion or to a next screen. |
| double click (only pressure) | opening (of a file, e.g. an e-mail, a document, etc), activation (of e.g. a functionality under an icon), the confirmation of a previous action, the insertion of a previously copied element and/or also the action for enlargement of a displayed section |
| movement with pressure over a depicted section on a screen | marking the depicted section on the displayed screen |
| long click (pressure) on a marked section (on the displayed screen) | copy-functionality (after marking) or opening of a listing |
| long click-pressure and leftward-movement | deletion-functionality (which have to be confirmed by a double click) |
| double rightward-movement | restore- functionality (which have to be confirmed by a double click) |

Furthermore, a marked spot on the screen could provide other command-sets to achieve other actions, by similar movements and/or pressure actions.

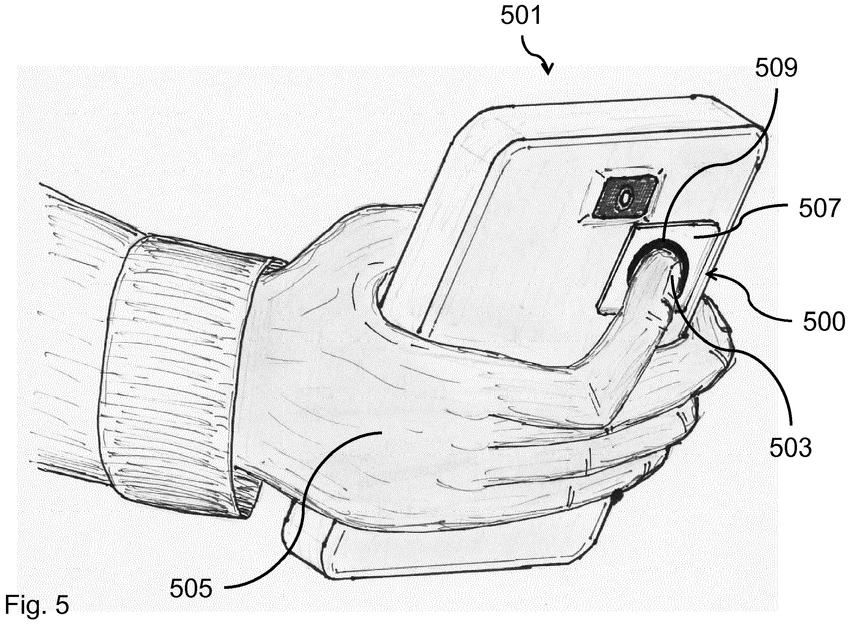

Fig 5 shows the control element 500 mounted on an electronic device 501. The control element 500 is an implementation of the control elements 100, 100b described above with respect to Figs. 1a-b.

The control element 500 can preferably be placed on any logical position on the body of the control element 500.

The electronic device 501 in Fig. 5 is a communication device, in particular a smartphone, wherein the control element 500 is mounted on the backside of the smartphone. This arrangement facilitates the user to hold and control the electronic device 501 by using a single hand 505. The user can further control the control element 500 with a single finger 503 of the hand 505 and, in this way, be able to use his thumb to improve his grip on the electronic device 501 and/or control element 500.

The control element 500 in Fig. 5 comprises a carrier 507 which surrounds a user interface 509. The user interface 509 is controllable by a single finger 503.

An additional advantage of the control element 500 is that the control element 500 when mounted on an electronic device 501 could be used beyond the yet known usages of a conventional computer-mouse. For instance, expensive repairs on electronic devices 501 with fixed physical user interphases that provide a mouse-functionality can be avoided or simplified, by mounting the control element 500 on them. The only requirements for using the control element 500 with an electronic device 501 are the availability of a logical or physical interface in the electronic device 501, to which the control element 500 can be coupled, for instance on a software- and protocol-basis or via a standardized jack.

The electronic device 501 can be an electric entity, wherein the control element 500 can be used to control the electric device 501 in various use cases ranging from, for instance, the use as a mouse on a smart phone or computer hardware, to even a guidance method for aircraft handling of modern commercial airplanes. An airplane can have an electric drive and brake-system, which needs to be moved on its autonomous ability to travel over the tarmac using its electric drive with the stored power which was generated during touch-down and followed braking down of the plane's velocity on the ground. An aircraft handler would in an extreme case be able to do all necessary actions of the aircraft handling, for instance moving the plane to another position or gate at the tarmac or rolling-way towards a take-off, with the control element 500 mounted on and connected to a control element of the electric drive of the plane, with no requirement to use a ground handling tug.

To control an electronic device 501 with the control element 500, the electronic device 501 has to fulfill certain criteria. For instance, an appropriate software or app should be installed on the electronic device 501 as well as an either physical or logical interface should be available on the electronic device 501.

Using the control element 500 on the electronic device 501 can require changes in the design of the electronic device 501, for instance on its housing, either prior to the mounting of the control element 500 or after the mounting of the control element. For example, a cover can be integrated on the housing of the electronic device 501 to cover the control element 500. The cover can add edges or other surface-structures to the surface of the control element 500 that can function as a gripping point for the user. The cover can be designed to be light and thin, and can, for instance, be made by a synthetic material, e.g. a fiber material, which has a structured surface. The control element 500 can be temporarily attached to the housing of the electronic device 501 by, for instance, a glue-based attachment and temporarily add the gripping-point to the electronic device 501.

The control element 500 may be a solution for all devices, entities, or appliances, which do not have a physical user interface on their outside, but could be equipped with one. The control element 500 could also function as a redundant solution for an installed and fixed user interface on a device which adds an electronic mouse-functionality to the device.

The control element 500 can be mounted on the electronic device 501 in such a way that it cannot physically move on the electronic device. The control element 500 can be attached and fixed when used, but could, in most cases, be removed or covered if it's not needed. A temporarily attachment can, for instance, be realized by a double-sided tape, a suction cup or a glue. Therefore, the same control element 500 can be used on a number of different electronic devices.

The methods, systems and devices described herein may be implemented as electrical and/or optical circuit within a chip or an integrated circuit or an application specific integrated circuit (ASIC). The invention can be implemented in digital and/or analogue electronic and optical circuitry.

The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The invention can be implemented in digital electronic circuitry, or in computer hardware, firmware, software, or in combinations thereof, e.g. in available hardware of conventional optical transceiver devices or in new hardware dedicated for processing the methods described herein.

The present disclosure also supports a computer program product including computer executable code or computer executable instructions that, when executed, causes at least one computer to execute the performing and computing steps described herein. Such a computer program product may include a readable non-transitory storage medium storing program code thereon for use by a computer.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. Control element (100) for controlling an electronic device (101), wherein the electronic device (101) has a signaling interface (103), the control element (100) comprising:
a user interface (105), for user interaction;
a sensor element (107) coupled to the user interface (105), the sensor element (107) being configured to register the user interaction with the user interface (105);
a communication interface (109) coupled to the sensor element (107), the communication interface (109) being configured to signal the user interaction towards the signaling interface (103) of the electronic device (101) to control the electronic device (101); and
a carrier (111, 303) carrying the user interface (105), the sensor element (107) and the communication interface (109), wherein the carrier (111, 303) is mountable to a housing of the electronic device (101).

2. Control element (100) according to claim 1,
wherein the carrier (111, 303) is mountable to the housing of the electronic device (101) by using a double-sided tape, a suction cup or a glue.

3. Control element (100) according to claim 1 or 2,
wherein the carrier (111, 303) is removable mountable to the housing of the electronic device (101).

4. Control element (100) according to one of the preceding claims,
wherein the sensor element (107) comprises a pressure pad which is configured to register the user interaction.

5. Control element (100) according to one of the preceding claims,
wherein the sensor element (107) comprises a power provision, in particular a wireless power supply interface (113), configured to supply the communication interface (109) and/or the sensor element (107) with electrical energy.

6. Control element (100) according to one of the preceding claims,
wherein the user interface (105), the sensor element (107) and the communication interface (109) form a computer mouse which is mountable by the carrier (111, 303) to the housing of the electronic device (101).

7. Control element (100) according to one of the preceding claims,
wherein the electronic device (101) is a portable communication device; and wherein the control element (100) is mountable to a housing of the communication device facilitating a user to hold and control the communication device by using a single hand (505).

8. Control element (100) according to one of the preceding claims,
wherein the user interface (105) comprises a button switch (201, 301), and
wherein the carrier (111, 303) at least partially encloses the button switch (201, 301), wherein the button switch (201, 301) is movably arranged in the carrier (111, 303).

9. Control element (100) according to claim 8, wherein the button switch (201, 301) is arranged horizontally and/or vertically movable in the carrier (111, 303), wherein the sensor element (107) is configured to detect the user interaction based on the movement of the button switch (201).

10. Control element (100) according to claim 8 or 9, comprising a mechanically flexible substrate (203), wherein the button switch (201, 301) rests on top of the mechanically flexible substrate (203) in an equilibrium position, and wherein the mechanically flexible substrate (203) is configured to cause a restoring force to the button switch (201, 301) to retract the button switch (201, 301) in its equilibrium position after deflection.

11. Control element (100) according to one of claims 8 to 10, wherein the button switch (201, 301) comprises a base segment (309), wherein the base segment (309) is at least partially surrounded by the carrier (111, 303), and wherein the base segment (309) has a spherical, ellipsoidal, conical, half-ball, coin-formed, dome-formed or a cylindrical shape.

12. Control element (100) according to any one of claims 8 to 11, wherein the button switch (201, 301) has a top segment (307), wherein the surface of the top segment (307) forms a dome, a spherical sector or a bulge (305).

13. Control element (100) according to any one of the preceding claims, wherein the communication interface (109) is a wireless communication interface, in particular a Bluetooth-interface, a NFC-interface, or a Wifi-interface, for wireless transmission of the user input to the signaling interface (103).

14. Control element (100) according to any one of the preceding claims, wherein the carrier (111, 303) is mountable into a receptacle (211) of the electronic device (101).

15. Control element (100) according to one of the preceding claims, comprising:
a controller (115) configured to convert the user interaction registered by the sensor element (107) into a command; and
wherein the communication interface (109) is configured to signal the command to the electronic device (101).

## Amended claims

### Amended claims in accordance with Rule 137(2) EPC.

1. Control element (100) for controlling an electronic device (101), wherein the electronic device (101) has a signaling interface (103), the control element (100) comprising:
a user interface (105), for user interaction;
a sensor element (107) coupled to the user interface (105), the sensor element (107) being configured to register the user interaction with the user interface (105);
a communication interface (109) coupled to the sensor element (107), the communication interface (109) being configured to signal the user interaction towards the signaling interface (103) of the electronic device (101) to control the electronic device (101); and
a carrier (111, 303) carrying the user interface (105), the sensor element (107) and the communication interface (109), wherein the carrier (111, 303) is mountable to a housing of the electronic device (101).

2. Control element (100) according to claim 1,
wherein the carrier (111, 303) is mountable to the housing of the electronic device (101) by using a double-sided tape, a suction cup or a glue.

3. Control element (100) according to claim 1 or 2,
wherein the carrier (111, 303) is removable mountable to the housing of the electronic device (101).

4. Control element (100) according to one of the preceding claims,
wherein the sensor element (107) comprises a pressure pad which is configured to register the user interaction.

5. Control element (100) according to one of the preceding claims,
wherein the sensor element (107) comprises a power provision configured to supply the communication interface (109) and/or the sensor element (107) with electrical energy.

6. Control element (100) according to one of the preceding claims,
wherein the user interface (105), the sensor element (107) and the communication interface (109) form a computer mouse which is mountable by the carrier (111, 303) to the housing of the electronic device (101).

7. Control element (100) according to one of the preceding claims,
wherein the electronic device (101) is a portable communication device; and wherein the control element (100) is mountable to a housing of the communication device facilitating a user to hold and control the communication device by using a single hand (505).

8. Control element (100) according to one of the preceding claims,
wherein the user interface (105) comprises a button switch (201, 301), and
wherein the carrier (111, 303) at least partially encloses the button switch (201, 301),
wherein the button switch (201, 301) is movably arranged in the carrier (111, 303).

9. Control element (100) according to claim 8, wherein the button switch (201, 301) is arranged horizontally and/or vertically movable in the carrier (111, 303), wherein the sensor element (107) is configured to detect the user interaction based on the movement of the button switch (201).

10. Control element (100) according to claim 8 or 9, comprising a mechanically flexible substrate (203), wherein the button switch (201, 301) rests on top of the mechanically flexible substrate (203) in an equilibrium position, and wherein the mechanically flexible substrate (203) is configured to cause a restoring force to the button switch (201, 301) to retract the button switch (201, 301) in its equilibrium position after deflection.

11. Control element (100) according to one of claims 8 to 10, wherein the button switch (201, 301) comprises a base segment (309), wherein the base segment (309) is at least partially surrounded by the carrier (111, 303), and wherein the base segment (309) has a spherical, ellipsoidal, conical, half-ball, coin-formed, dome-formed or a cylindrical shape.

12. Control element (100) according to any one of claims 8 to 11, wherein the button switch (201, 301) has a top segment (307), wherein the surface of the top segment (307) forms a dome, a spherical sector or a bulge (305).

13. Control element (100) according to any one of the preceding claims, wherein the communication interface (109) is a wireless communication interface for wireless transmission of the user input to the signaling interface (103).

14. Control element (100) according to any one of the preceding claims, wherein the carrier (111, 303) is mountable into a receptacle (211) of the electronic device (101).

15. Control element (100) according to one of the preceding claims, comprising:
a controller (115) configured to convert the user interaction registered by the sensor element (107) into a command; and
wherein the communication interface (109) is configured to signal the command to the electronic device (101).
